# EUROPÄISCHE PATENTANMELDUNG

(11) **EP 4 414 204 A1**
(43) Veröffentlichungstag der Anmeldung: **14.08.2024**
(21) Anmeldenummer: 24151802.6
(22) Anmeldetag: 15.01.2024
(51) Int. Cl.: B60L 5/00, B60L 5/16, B60L 5/28

(54) **STROMABNEHMER FÜR EIN SCHIENENFAHRZEUG UND SCHIENENFAHRZEUG**

(30) Priorität: 31.01.2023 AT 500552023
(71) Anmelder: Siemens Mobility Austria GmbH, 1210 Wien (AT)
(72) Erfinder: Perebner, Stefan, 3385 Gerersdorf (AT); Havlicek, Georg, 1190 Wien (AT); Saliger, Christian, 1130 Wien (AT); Schletter, Stefan, 1130 Wien (AT)
(74) Vertreter: Siemens Patent Attorneys

(57) **Zusammenfassung**

Die Erfindung bezieht sich auf einen Stromabnehmer für ein Schienenfahrzeug mit einem mit einer Lagervorrichtung (2) gekoppelten Stromabnehmergestänge sowie mit einer Auslenkungsbegrenzungsvorrichtung, wobei das Stromabnehmergestänge einen auslenkbaren Unterarm (1) aufweist, welcher drehbar mit der Lagervorrichtung (2) verbunden ist.

Es wird vorgeschlagen, dass die Auslenkungsbegrenzungsvorrichtung ein Schwenkelement (4) und ein Kontaktelement (5) umfasst, wobei das Schwenkelement (4) zumindest um eine erste Parallele zu einer Längsachse (3) der Lagervorrichtung (2) oder zumindest um eine zweite Parallele zu einer Hochachse (32) der Lagervorrichtung (2) drehbar mit der Lagervorrichtung (2) verbunden ist, wobei das Kontaktelement (5) fest mit dem Unterarm (1) verbunden ist, und wobei das Schwenkelement (4) in eine Lage drehbar ist, in welcher das Schwenkelement (4) einen Anschlag für das Kontaktelement (5) bildet.

Dadurch wird eine platzsparende Auslenkungsbegrenzungsvorrichtung mit moderatem Betätigungskraftbedarf erreicht.

## Beschreibung

Die Erfindung betrifft einen Stromabnehmer für ein Schienenfahrzeug mit einem Stromabnehmergestänge und einer Lagervorrichtung, mit welcher das Stromabnehmergestänge gekoppelt ist und über welche das Stromabnehmergestänge mit einem Schienenfahrzeug, insbesondere mit einem Schienenfahrzeugdach, verbindbar ist, sowie mit einer Auslenkungsbegrenzungsvorrichtung, wobei das Stromabnehmergestänge einen auslenkbaren Unterarm aufweist, welcher drehbar mit der Lagervorrichtung verbunden ist.

Elektrisch betriebene Schienenfahrzeuge weisen häufig Stromabnehmer (z.B. Einholm- oder Scherenstromabnehmer etc.) auf, mittels welchen eine Stromabnahme von einem Fahrdraht oder von einer Stromschiene etc. sowie eine Versorgung von elektrischen Antrieben der Fahrzeuge mit Elektrizität erfolgt.

Oft umfassen diese Stromabnehmer Auslenkungsbegrenzungsvorrichtungen, insbesondere Steighöhenbegrenzungsvorrichtungen, welche zur Begrenzung von Auslenkungen, insbesondere Steighöhen, der Stromabnehmer vorgesehen sind.

Eine Steighöhenbegrenzungsvorrichtung ist eine Vorrichtung, welche ein Steigen eines Stromabnehmers über eine definierte Höhe hinaus verhindert und welche häufig aktivierbar und deaktivierbar ausgeführt ist.

In einem Normalbetrieb von Schienenfahrzeugen mit Stromabnehmern begrenzen üblicherweise Oberleitungen die Steighöhen der Stromabnehmer. Werden die Stromabnehmer beispielsweise auf Bahnstrecken eingesetzt, auf welchen Oberleitungen in bestimmten Abschnitten unterbrochen sind (z.B. in Bereichen nichtüberspannter Klappbrücken), so ist eine Steighöhenbegrenzung der Stromabnehmer erforderlich.

Aus dem Stand der Technik ist beispielsweise die WO 2021/122375 A1 bekannt, welche ein Dach eines Schienenfahrzeugs mit einem darauf angeordneten Stromabnehmer offenbart. Der Stromabnehmer weist ein Stromabnehmergestänge mit einem Oberarm, einem Unterarm sowie weiteren Komponenten auf. An einer Oberseite des Stromabnehmergestänges ist eine Wippe mit Schleifleisten mit dem Stromabnehmergestänge verbunden. Über die Schleifleisten kontaktiert der Stromabnehmer eine Oberleitung. Der Unterarm ist drehbar mit einer Lagervorrichtung gekoppelt, die Lagervorrichtung ist über Stützisolatoren mit dem Dach verbunden.

Weiterhin beschreibt die EP 0 042 334 A1 einen Pantographen für ein Schienenfahrzeug, welcher bei Einwirkung einer außergewöhnlichen Kraft abgesenkt wird. Der Pantograph weist eine Belastungsbegrenzungsvorrichtung auf, welche in Abhängigkeit einer Belastung einer Wippe des Stromabnehmers Bewegungen des Stromabnehmers verhindert. Der Stromabnehmer weist Mittel zum Ausschalten einer Hubfeder des Stromabnehmers auf, welche einen mit einem Unterarm des Stromabnehmers um eine Querachse des Stromabnehmers drehbar verbundenen Haken, der mit der Hubfeder in Eingriff sein kann, umfassen können.

Der Erfindung liegt die Aufgabe zugrunde, einen Stromabnehmer mit einer Auslenkungsbegrenzungsvorrichtung mit geringem Bauraum- und Betätigungskraftbedarf anzugeben.

Erfindungsgemäß wird diese Aufgabe gelöst mit einem Stromabnehmer nach Anspruch 1, bei dem die Auslenkungsbegrenzungsvorrichtung ein Schwenkelement und ein Kontaktelement umfasst, wobei das Schwenkelement zumindest um eine erste Parallele zu einer Längsachse der Lagervorrichtung oder zumindest um eine zweite Parallele zu einer Hochachse der Lagervorrichtung drehbar mit der Lagervorrichtung verbunden ist, wobei das Kontaktelement fest mit dem Unterarm verbunden ist, und wobei das Schwenkelement in eine Lage drehbar ist, in welcher das Schwenkelement einen Anschlag für das zusammen mit dem Unterarm auslenkbare Kontaktelement bildet.

Dadurch fungiert die Auslenkungsbegrenzungsvorrichtung als variable Anschlagvorrichtung. Auf teleskopartig ausfahrende, ineinandergreifende Teile, wie z.B. einen Fanghebel und eine Fangkonsole, kann verzichtet werden. Die Auslenkungsbegrenzungsvorrichtung ist daher sehr kompakt und erfordert wenig Bauraum. Es ist beispielsweise möglich, das Schwenkelement in geringem Abstand von der Lagervorrichtung, die beispielsweise als Grundrahmen oder Grundplatte etc. ausgebildet sein kann, mit der Lagervorrichtung zu verbinden. Dadurch vergrößert sich beispielsweise ein verfügbarer Bauraum für einen Hubantrieb des Stromabnehmers oder es können kleinere Abmessungen für die Lagervorrichtung gewählt werden etc.

Die Auslenkungsbegrenzungsvorrichtung erfordert aufgrund ihrer kompakten, einfachen und leichten Bauweise (das Kontaktelement kann beispielsweise als lasergeschnittene, mit dem Unterarm verschweißte Lasche in Baustahl ausgeführt sein, während teleskopartig ausfahrende, in Fangkonsolen eingreifende Fanghebel häufig als Edelstahl-Frästeile ausgebildet sind etc.) sowie ihrer geringen Teileanzahl etc. keine großen Betätigungskräfte.

Die Auslenkungsbegrenzungsvorrichtung ist im Hinblick auf ihre Aktivierbarkeit flexibel. Es ist beispielsweise keine Absenkung des Stromabnehmers zur Aktivierung der Auslenkungsbegrenzungsvorrichtung erforderlich. Weiterhin ist die Auslenkungsbegrenzungsvorrichtung z.B. auch dann aktivierbar, wenn der Stromabnehmer ein Maß einer Auslenkung, auf das die Auslenkung des Stromabnehmers begrenzt werden soll, überschritten hat.

Die einfache Bauweise der Auslenkungsbegrenzungsvorrichtung bewirkt auch, dass eine Montage, Demontage, Wartung, Instandhaltung oder Einstellung etc. der Auslenkungsbegrenzungsvorrichtung einen akzeptablen Aufwand verursacht.

Weitere vorteilhafte Ausgestaltungen des erfindungsgemäßen Stromabnehmers ergeben sich aus den Unteransprüchen.

Günstig ist es beispielsweise, wenn die Auslenkungsbegrenzungsvorrichtung zumindest einen Aktuator aufweist, mittels welchem das Schwenkelement betätigbar ist. Die Auslenkungsbegrenzungsvorrichtung erfordert lediglich moderate Betätigungskräfte, weshalb der Aktuator kompakt, leicht und mit geringem Energiebedarf ausgeführt sein kann.

Eine zweckmäßige Beweglichkeit der Auslenkungsbegrenzungsvorrichtung wird ermöglicht, wenn der zumindest eine Aktuator gelenkig mit dem Schwenkelement und gelenkig mit der Lagervorrichtung verbunden ist.

Im Zusammenhang mit der zweckmäßigen Beweglichkeit der Auslenkungsbegrenzungsvorrichtung erhält man eine einfache Konstruktionslösung, wenn der zumindest eine Aktuator über ein Gabelgelenk mit der Lagervorrichtung verbunden ist.

Eine Versorgung der Auslenkungsbegrenzungsvorrichtung über eine fluidische Einrichtung des Stromabnehmers oder eines Schienenfahrzeugs, wie z.B. über eine pneumatische oder hydraulische Versorgungseinrichtung, wird ermöglicht, wenn der der zumindest eine Aktuator als fluidischer Aktuator ausgebildet ist und einen Zylinder sowie einen Kolben aufweist.

Im Zusammenhang mit dem fluidischen Aktuator kann es im Hinblick auf eine zweckmäßige Beweglichkeit der Auslenkungsbegrenzungsvorrichtung vorteilhaft sein, wenn der Zylinder gelenkig mit dem Schwenkelement verbunden ist und der Kolben gelenkig mit der Lagervorrichtung verbunden ist.

Eine Einstellung eines Maßes einer zulässigen Auslenkung des Stromabnehmers für eine Auslenkungsbegrenzung kann beispielsweise realisiert werden, wenn das Kontaktelement oder/und das Schwenkelement zumindest in Richtung der Längsachse der Lagervorrichtung verlängerbar ausgebildet ist/sind.

Eine Verlängerung des Kontaktelements kann beispielsweise erreicht werden, wenn an einer dem Unterarm abgewandten Seite des Kontaktelements eine Kugeldruckschraube mit dem Kontaktelement verbunden ist, welche einen definierten und variablen Kontakt mit dem Schwenkelement ermöglicht. Die Kugeldruckschraube kann beispielsweise aus einem mit dem Kontaktelement verbundenen Gewinde ausgeschraubt oder in das Gewinde eingeschraubt werden, wodurch die Verlängerung oder eine Verkürzung des Kontaktelements erreicht werden kann.

Eine Einstellung eines Maßes einer zulässigen Auslenkung des Stromabnehmers für eine Auslenkungsbegrenzung wird auch ermöglicht, wenn zumindest das Schwenkelement zumindest in Richtung der Längsachse der Lagervorrichtung beweglich und arretierbar angeordnet ist.

Das Schwenkelement kann hierzu beispielsweise mit einem Träger verbunden sein, welcher Langlöcher aufweist. Über die Langlöcher kann der Träger z.B. mittels Schrauben, über welche der Träger mit der Lagervorrichtung verschraubt werden kann, an der Lagervorrichtung arretiert oder von der Lagervorrichtung gelöst werden. Ist der Träger beispielsweise durch Lösen der Schrauben gelockert, so kann der Träger in Richtung der Längsachse der Lagervorrichtung bewegt werden, um beispielsweise relativ zu der Lagervorrichtung positioniert und an einer bestimmten Position der Lagervorrichtung arretiert zu werden.

Eine Positionierung des Trägers mit dem Schwenkelement kann beispielsweise mittels eines Längsbegrenzungsgewindestifts durchgeführt werden, welcher z.B. über ein Längsbegrenzungsgewinde mit der Lagervorrichtung verbunden sein kann und welcher beispielsweise durch Ein- oder Ausschrauben in eine oder aus einer Längsbegrenzungsgewindebohrung in Richtung der Längsachse der Lagervorrichtung eine Endposition für den Träger, welcher z.B. in dieser Endposition den Längsbegrenzungsgewindestift kontaktieren kann, definieren kann.

Eine Vorzugslösung erhält man, wenn Drehbewegungen des Schwenkelements begrenzbar sind, wobei Endlagen der Drehbewegungen einstellbar sind.

Drehbewegungen des Schwenkelements können beispielsweise durch Drehhemmungsgewindestifte begrenzt werden, welche beispielsweise aus Drehhemmungsgewindebohrungen oberhalb eines Drehgelenks, über welches das Schwenkelement drehbar mit der Lagervorrichtung verbunden ist, ausgeschraubt werden können und so eine Aufwärtsschwenkbewegung des Schwenkelements, je nachdem, wie weit die Drehhemmungsgewindebohren ausgeschraubt sind, begrenzen.

Eine selbsttätige Rückstellung des Schwenkelements wird ermöglicht, wenn die Auslenkungsbegrenzungsvorrichtung zumindest eine Rückstellfeder aufweist, welche mit dem Schwenkelement einerseits und mit der Lagervorrichtung andererseits verbunden ist.

Im Zusammenhang mit der selbsttätigen Rückstellung des Schwenkelements kann es günstig sein, wenn die zumindest eine Rückstellfeder in jener Lage, in welcher das Schwenkelement einen Anschlag für das Kontaktelement bildet, gespannt ist. Durch diese Maßnahme wird dann, wenn die Auslenkungsbegrenzungsvorrichtung deaktiviert werden soll, das Schwenkelement selbsttätig in eine eingeschwenkte oder inaktive Lage, in welcher das Schwenkelement keinen Anschlag für das Kontaktelement bildet, zurückgeführt.

Eine selbsttätige Rückstellbarkeit des Schwenkelements kann auch realisiert werden, wenn die Auslenkungsbegrenzungsvorrichtung zumindest eine Aktuatorrückstellfeder aufweist, welche mit dem Zylinder einerseits und mit dem Kolben andererseits verbunden ist.

Dadurch wird eine aktuatoreigene Rückstellfunktion der Auslenkungsbegrenzungsvorrichtung erreicht.

Ein aufgrund einfacher Geometrie aufwandsarm fertigbares Schwenkelement erhält man, wenn das Schwenkelement zumindest annähernd eine plattenförmig-prismatische Form mit dreieckiger Grundfläche aufweist.

Ein Fertigungsaufwand im Hinblick auf das Kontaktelement kann reduziert werden, wenn das Kontaktelement zumindest annähernd eine plattenförmig-prismatische Form mit dreieckiger Grundfläche aufweist.

Ein erfolgversprechendes Anwendungsgebiet für den erfindungsgemäßen Stromabnehmer kann mit einem Schienenfahrzeug mit zumindest einem erfindungsgemäßen Stromabnehmer erschlossen werden.

Schienenfahrzeuge benötigen häufig Stromabnehmer mit Auslenkungsbegrenzungsvorrichtungen, beispielsweise dann, wenn sie auf Bahnstrecken eingesetzt werden, auf welchen Oberleitungen in bestimmten Abschnitten unterbrochen sind etc.

Nachfolgend wird die Erfindung anhand von Ausführungsbeispielen näher erläutert.

Es zeigen beispielhaft:

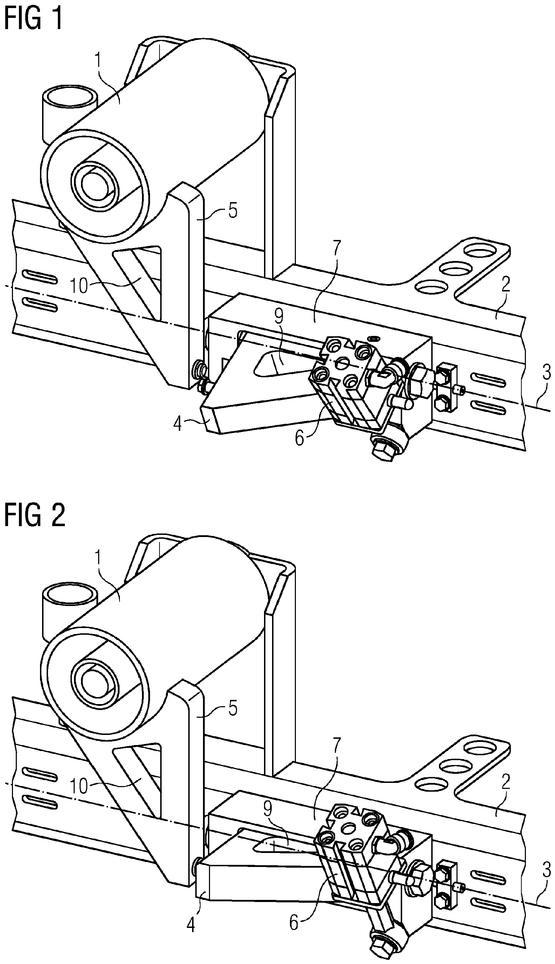

- Fig. 1:: Einen Schrägriss eines Ausschnitts aus einer beispielhaften ersten Ausführungsvariante eines erfindungsgemäßen Stromabnehmers in geschnittener Darstellung, mit einer deaktivierten, aktuatorbetätigten Auslenkungsbegrenzungsvorrichtung, welche ein um eine Parallele zu einer Längsachse einer Lagervorrichtung des Stromabnehmers drehbares Schwenkelement aufweist,
- Fig. 2:: Einen Schrägriss eines Ausschnitts aus einer beispielhaften zweiten Ausführungsvariante eines erfindungsgemäßen Stromabnehmers in geschnittener Darstellung, mit einer aktivierten, aktuatorbetätigten Auslenkungsbegrenzungsvorrichtung, welche ein um eine Parallele zu einer Längsachse einer Lagervorrichtung des Stromabnehmers drehbares Schwenkelement aufweist,

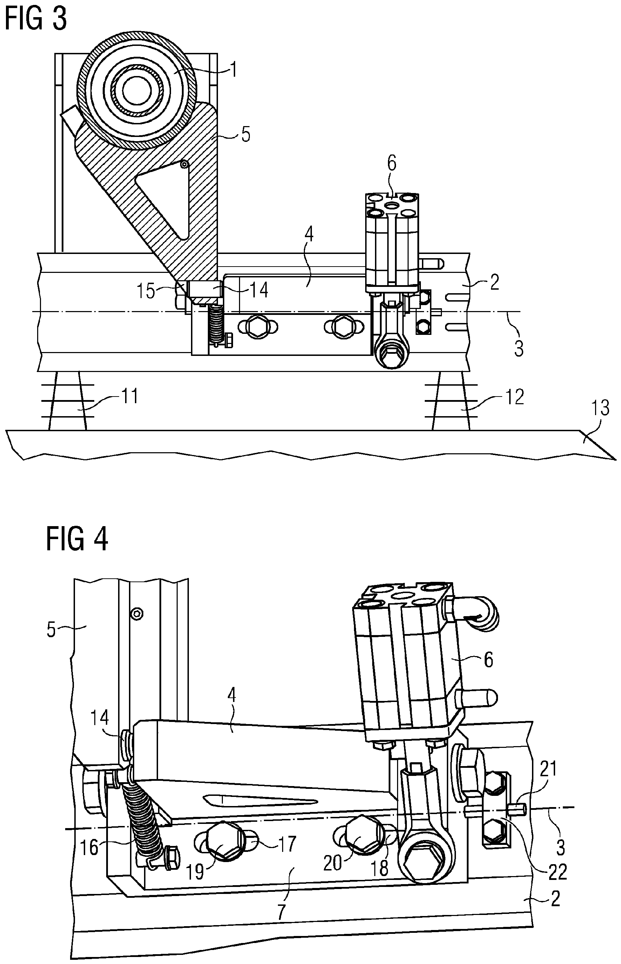

- Fig. 3:: Einen Seitenriss eines Ausschnitts aus einer beispielhaften Ausführungsvariante eines erfindungsgemäßen Schienenfahrzeugs mit einer beispielhaften dritten Ausführungsvariante eines erfindungsgemäßen Stromabnehmers in geschnittener Darstellung, mit einer aktivierten, aktuatorbetätigten Auslenkungsbegrenzungsvorrichtung mit einem mittels einer Kugeldruckschraube in Richtung einer Längsachse einer Lagervorrichtung des Stromabnehmers verlängerbaren Kontaktelement,
- Fig. 4:: Einen Schrägriss eines Ausschnitts aus einer beispielhaften vierten Ausführungsvariante eines erfindungsgemäßen Stromabnehmers mit einer aktivierten, aktuatorbetätigten Auslenkungsbegrenzungsvorrichtung mit einem in Richtung einer Längsachse einer Lagervorrichtung des Stromabnehmers beweglichen und arretierbaren Schwenkelement,

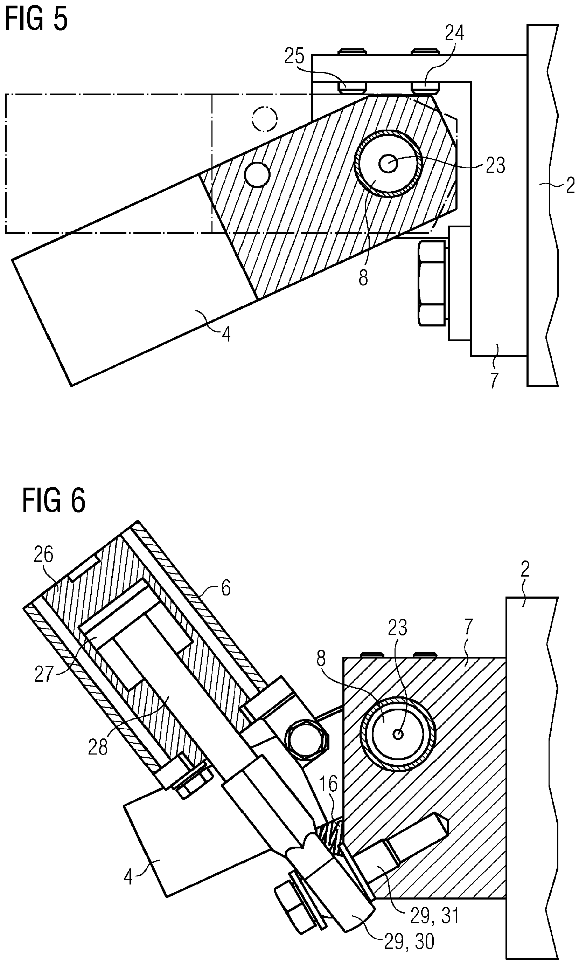

- Fig. 5:: Einen Seitenriss eines Ausschnitts aus einer beispielhaften fünften Ausführungsvariante eines erfindungsgemäßen Stromabnehmers in geschnittener Darstellung, mit einer Auslenkungsbegrenzungsvorrichtung umfassend ein Schwenkelement, wobei Drehbewegungen des Schwenkelements begrenzbar und Endlagen der Drehbewegungen einstellbar sind,
- Fig. 6:: Einen Seitenriss eines Ausschnitts aus einer beispielhaften sechsten Ausführungsvariante eines erfindungsgemäßen Stromabnehmers in geschnittener Darstellung, mit einer Auslenkungsbegrenzungsvorrichtung umfassend einen pneumatischen Aktuator mit einem Zylinder und einem Kolben,

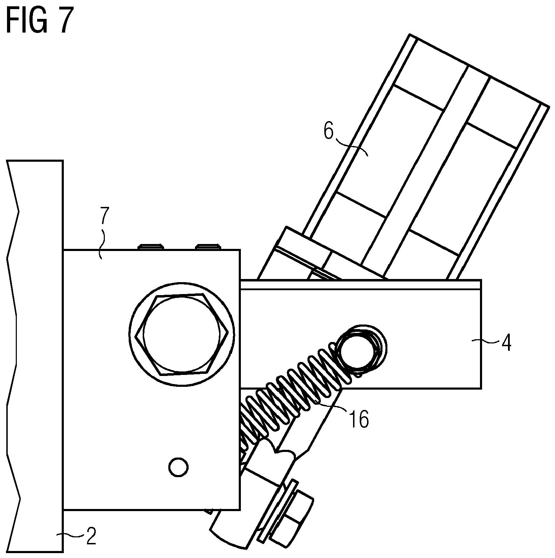

- Fig. 7:: Einen Seitenriss eines Ausschnitts aus einer beispielhaften siebenten Ausführungsvariante eines erfindungsgemäßen Stromabnehmers in geschnittener Darstellung, mit einer Auslenkungsbegrenzungsvorrichtung umfassend eine Rückstellfeder, welche zwischen einem Schwenkelement und einem Träger der Auslenkungsbegrenzungsvorrichtung angeordnet ist, wobei der Träger mit einer Lagervorrichtung des Stromabnehmers verbunden ist,

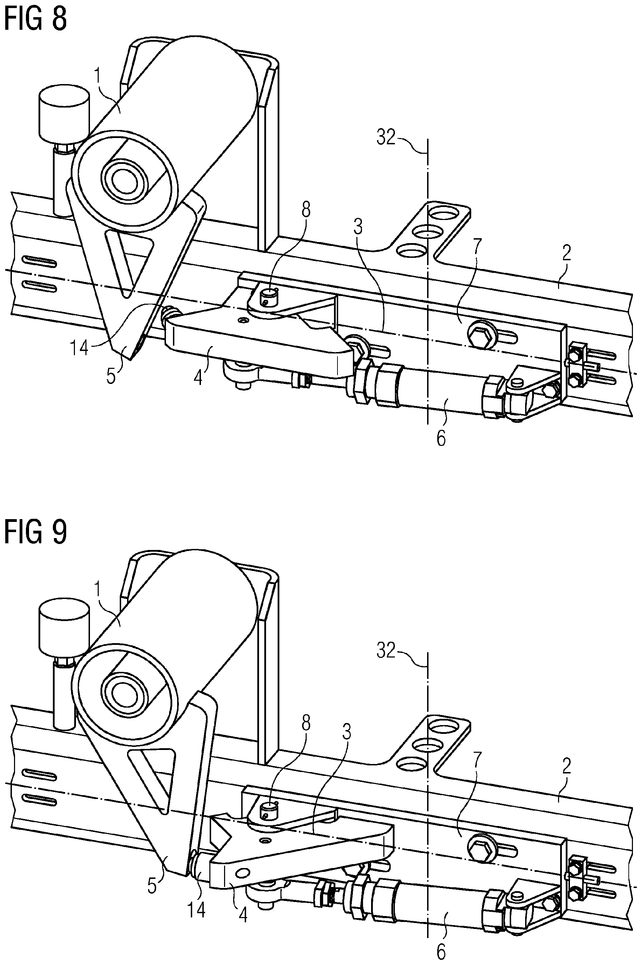

- Fig. 8:: Einen Schrägriss eines Ausschnitts aus einer beispielhaften achten Ausführungsvariante eines erfindungsgemäßen Stromabnehmers in geschnittener Darstellung, mit einer deaktivierten, aktuatorbetätigten Auslenkungsbegrenzungsvorrichtung, welche ein um eine Parallele zu einer Hochachse einer Lagervorrichtung des Stromabnehmers drehbares Schwenkelement aufweist, und
- Fig. 9:: Einen Schrägriss eines Ausschnitts aus einer beispielhaften neunten Ausführungsvariante eines erfindungsgemäßen Stromabnehmers in geschnittener Darstellung, mit einer aktivierten, aktuatorbetätigten Auslenkungsbegrenzungsvorrichtung, welche ein um eine Parallele zu einer Hochachse einer Lagervorrichtung des Stromabnehmers drehbares Schwenkelement aufweist.

Fig. 1 zeigt einen Ausschnitt aus einer beispielhaften ersten Ausführungsvariante eines erfindungsgemäßen Stromabnehmers für ein Schienenfahrzeug in geschnittener Darstellung.

Der Stromabnehmer ist als Einholmpantograph ausgebildet und umfasst ein metallisches Stromabnehmergestänge mit einem auslenkbaren Unterarm 1 sowie eine als metallischer Grundrahmen des Stromabnehmers ausgeführte Lagervorrichtung 2. Der Unterarm 1 ist um eine Unterarm-Drehachse quer zu einer Längsachse 3 der Lagervorrichtung 2 drehbar mit der Lagervorrichtung 2 gekoppelt. Die Lagervorrichtung 2 ist über in Fig. 1 nicht dargestellte Stützisolatoren mit einem in Fig. 1 ebenfalls nicht gezeigten Schienenfahrzeugdach verbunden.

Der Stromabnehmer weist weiterhin eine Auslenkungsbegrenzungsvorrichtung auf, welche ein metallisches Schwenkelement 4, ein metallisches Kontaktelement 5 sowie einen pneumatischen Aktuator 6 aufweist, wobei die Auslenkungsbegrenzungsvorrichtung über den Aktuator 6 betätigt werden kann. Der Aktuator 6 ist, wie im Zusammenhang mit Fig. 6 näher beschrieben, als Zylinder-Kolben-Aktuator ausgebildet.

Das Schwenkelement 4 ist über einen Träger 7 aus Stahl und mittels eines Drehgelenks 8, wie es beispielhaft in Fig. 5 dargestellt ist, um eine erste Parallele zu der Längsachse 3 drehbar mit der Lagervorrichtung 2 verbunden. Der Träger 7 ist mit der Lagervorrichtung 2 verschraubt.

Das Kontaktelement 5 ist mit dem Unterarm 1 verschweißt und daher zusammen mit dem Unterarm 1 auslenkbar.

Das Schwenkelement 4 ist in eine Lage drehbar, in welcher das Schwenkelement 4 einen Anschlag für das zusammen mit dem Unterarm 1 auslenkbaren Kontaktelement 5 bildet.

Soll der Stromabnehmer an eine in Fig. 1 nicht gezeigte Oberleitung angelegt werden, so lenkt der Unterarm 1 gegen den Uhrzeigersinn aus und der Stromabnehmer wird angehoben. Ist die Auslenkungsbegrenzungsvorrichtung aktiviert, wie beispielhaft in Fig. 2 gezeigt, so kontaktiert das Kontaktelement 5 das Schwenkelement 4 bei einer definierten Steighöhe des Stromabnehmers, welche, wie im Zusammenhang mit Fig. 3 und Fig. 4 beschrieben, über Justierung des Kontaktelements 5 und/oder des Schwenkelements 4 eingestellt werden kann, wodurch ein weiteres Anheben des Stromabnehmers über die definierte Steighöhe hinaus verhindert wird. Die beispielhafte Auslenkungsbegrenzungsvorrichtung fungiert demnach als Steighöhenbegrenzungsvorrichtung des Stromabnehmers.

Fig. 1 zeigt eine nach unten geschwenkte, erste Lage des Schwenkelements 4, in welcher die Auslenkungsbegrenzungsvorrichtung deaktiviert ist. In dieser ersten Lage des Schwenkelements 4 kann das Kontaktelement 5 das Schwenkelement 4 während einer Aufwärtsbewegung des Stromabnehmers passieren, ohne dass das Kontaktelement 5 durch das Schwenkelement 4 blockiert wird.

Um die Auslenkungsbegrenzungsvorrichtung zu aktivieren, wird das Schwenkelement 4, durch den Aktuator 6 betätigt, aus der ersten Lage nach oben geschwenkt und mittels des Aktuators 6 in einer zweiten Lage, in welcher das Schwenkelement 4 horizontal sowie rechtwinklig zu der Lagervorrichtung 2 ausgerichtet ist und welche in Fig. 2 gezeigt ist, gehalten. In der zweiten Lage kontaktiert das Kontaktelement 5 das Schwenkelement 4 bei Erreichen der definierten Steighöhe des Stromabnehmers, wodurch eine weitere Auslenkung des Unterarms 1 gegen den Uhrzeigersinn blockiert ist.

Das Schwenkelement 4 und das Kontaktelement 5 sind als lasergeschnittene Laschen in Baustahl ausgeführt und weisen jeweils annähernd eine plattenförmig-prismatische Form mit dreieckiger Grundfläche auf. Aus Leichtbaugründen weist das Schwenkelement 4 eine erste Ausnehmung 9 und das Kontaktelement 5 eine zweite Ausnehmung 10 auf.

In Fig. 2 ist ein Schrägriss eines Ausschnitts aus einer beispielhaften zweiten Ausführungsvariante eines erfindungsgemäßen Stromabnehmers in geschnittener Darstellung offenbart.

Diese beispielhafte zweite Ausführungsvariante eines erfindungsgemäßen Stromabnehmers gemäß Fig. 2 entspricht jener beispielhaften ersten Ausführungsvariante eines erfindungsgemäßen Stromabnehmers, die in Fig. 1 dargestellt ist. Es werden daher in Fig. 2 die gleichen Bezugszeichen wie in Fig. 1 verwendet.

Im Unterschied zu Fig. 1 zeigt Fig. 2 eine Auslenkungsbegrenzungsvorrichtung in einem aktivierten Zustand, in welchem ein um eine erste Parallele zu einer Längsachse 3 einer Lagervorrichtung 2 des Stromabnehmers drehbar mit der Lagervorrichtung 2 verbundenes Schwenkelement 4 der Auslenkungsbegrenzungsvorrichtung in einer nach oben geschwenkten Lage angeordnet horizontal und rechtwinklig zu der Lagervorrichtung 2 ausgerichtet ist.

Mit einem Unterarm 1 des Stromabnehmers ist ein Kontaktelement 5 der Auslenkungsbegrenzungsvorrichtung fest verbunden. Fig. 2 zeigt eine Winkellage des Unterarms 1 und des Kontaktelements 5, in welcher das Kontaktelement 5 das Schwenkelement 4 kontaktiert, wodurch das Schwenkelement 4 über das Kontaktelement 5 eine Drehbewegung des Unterarms 1 gegen den Uhrzeigersinn blockiert.

Fig. 3 offenbart einen Seitenriss eines Ausschnitts aus einer beispielhaften Ausführungsvariante eines erfindungsgemäßen Schienenfahrzeugs mit einer beispielhaften dritten Ausführungsvariante eines erfindungsgemäßen Stromabnehmers in geschnittener Darstellung.

Der Stromabnehmer nach Fig. 3 entspricht jener beispielhaften ersten Ausführungsvariante eines erfindungsgemäßen Stromabnehmers gemäß Fig. 1 und umfasst ein Stromabnehmergestänge mit einem Unterarm 1, eine Lagervorrichtung 2 sowie eine Auslenkungsbegrenzungsvorrichtung. Auf das Stromabnehmergestänge ist eine in Fig. 3 nicht gezeigte Wippe mit Schleifleisten aufgesetzt, wobei der Stromabnehmer über die Schleifleisten eine in Fig. 1 ebenfalls nicht dargestellte Oberleitung kontaktieren kann, über welche das Schienenfahrzeug mit Elektrizität versorgt werden kann.

Der Unterarm 1 ist drehbar mit der Lagervorrichtung 2 gekoppelt, die als Stromabnehmer-Grundrahmen ausgeführte Lagervorrichtung 2 ist über einen ersten Stützisolator 11, einen zweiten Stützisolator 12 sowie in Fig. 3 nicht gezeigte, weitere Stützisolatoren mit einem Dach 13 des Schienenfahrzeugs verbunden. Der Stromabnehmer ist demnach als Dachstromabnehmer des Schienenfahrzeugs ausgebildet und auf dem Dach 13 angeordnet.

Die Auslenkungsbegrenzungsvorrichtung weist, wie auch im Zusammenhang mit Fig. 1 beschrieben, ein um eine erste Parallele zu einer Längsachse 3 der Lagervorrichtung 2 drehbar mit der Lagervorrichtung 2 verbundenes Schwenkelement 4 auf, welches in jenem in Fig. 3 gezeigten, aktivierten Zustand der Auslenkungsbegrenzungsvorrichtung horizontal und rechtwinklig zu der Lagervorrichtung 2 ausgerichtet ist.

Die Auslenkungsbegrenzungsvorrichtung weist weiterhin einen pneumatischen Aktuator 6 zur Betätigung des Schwenkelements 4 sowie ein Kontaktelement 5, welches fest mit dem Unterarm 1 verbunden ist, auf. In Fig. 3 ist eine Winkellage des Unterarms 1 und des Kontaktelements 5 dargestellt, in welcher das Kontaktelement 5 über eine Kugeldruckschraube 14 das Schwenkelement 4 kontaktiert.

Das Kontaktelement 5 ist mittels der Kugeldruckschraube 14 in Richtung der Längsachse 3 verlängerbar. Die Kugeldruckschraube 14 ist in einer Kugeldruckschraubengewindebohrung 15 angeordnet, welche in dem Kontaktelement 5 angeordnet ist. Die Kugeldruckschraube 14 kann zur Verkürzung des Kontaktelements 5 in die Kugeldruckschraubengewindebohrung 15 eingeschraubt und zur Verlängerung des Kontaktelements 5 aus der Kugeldruckschraubengewindebohrung 15 ausgeschraubt werden. Je weiter die Kugeldruckschraube aus der Kugeldruckschraubengewindebohrung 15 ausgeschraubt ist, umso stärker sind bei aktivierter Auslenkungsbegrenzungsvorrichtung Drehbewegungen des Unterarms 1 und somit Auslenkungen des Stromabnehmers begrenzt.

Fig. 4 zeigt einen Schrägriss eines Ausschnitts aus einer beispielhaften vierten Ausführungsvariante eines erfindungsgemäßen Stromabnehmers mit einer aktivierten, aktuatorbetätigten Auslenkungsbegrenzungsvorrichtung mit einem in Richtung einer Längsachse 3 einer Lagervorrichtung 2 des Stromabnehmers beweglichen und arretierbaren Schwenkelement 4.

Diese beispielhafte vierte Ausführungsvariante eines erfindungsgemäßen Stromabnehmers entspricht jener beispielhaften ersten Ausführungsvariante eines erfindungsgemäßen Stromabnehmers, welche in Fig. 1 gezeigt ist.

Ein Kontaktelement 5 der Auslenkungsbegrenzungsvorrichtung ist, wie auch im Zusammenhang mit Fig. 3 beschrieben, mittels einer Kugeldruckschraube 14 in Richtung der Längsachse 3 verlängerbar ausgeführt. Zusätzlich ist ein Träger 7 der Auslenkungsbegrenzungsvorrichtung, auf welchem das Schwenkelement 4, ein pneumatischer Aktuator 6 der Auslenkungsbegrenzungsvorrichtung zur Betätigung des Schwenkelements 4 sowie eine im Zusammenhang mit Fig. 7 beispielhaft beschriebene Rückstellfeder 16 der Auslenkungsbegrenzungsvorrichtung angeordnet sind, in Richtung der Längsachse 3 beweglich und arretierbar ausgebildet. Somit sind auch das Schwenkelement 4, der Aktuator 6 und die Rückstellfeder 16 in Richtung der Längsachse 3 beweglich und arretierbar ausgebildet.

Der Träger 7 ist über ein erstes Langloch 17 mittels einer ersten Schraube 19 und über ein zweites Langloch 18 mittels einer zweiten Schraube 20 mit der Lagervorrichtung 2 verbunden. Werden die erste Schraube 19 und die zweite Schraube 20 gelöst, so kann der Träger 7 gelockert und in Richtung der Längsachse 3 verschoben werden. Mittels eines Längsbegrenzungsgewindestifts 21, welcher in einer Führungsleiste 22 mit einer in Fig. 4 nicht sichtbaren Längsbegrenzungsgewindebohrung geführt ist und aus dieser Längsbegrenzungsgewindebohrung in Richtung der Längsachse 3 ausgeschraubt und in Richtung der Längsachse 3 in diese Längsbegrenzungsgewindebohrung eingeschraubt werden kann, kann eine Endposition des Trägers 7 eingestellt werden, an welcher der Träger 7 arretiert werden kann. An dieser Endposition kontaktiert der Träger 7 den Längsbegrenzungsgewindestift 21. Je weiter der Träger 7 nach links verschoben ist, umso stärker sind bei aktivierter Auslenkungsbegrenzungsvorrichtung Auslenkungen des Kontaktelements 5 gegen den Uhrzeigersinn durch das Schwenkelement 4 begrenzt.

In Fig. 5 ist ein Seitenriss eines Ausschnitts aus einer beispielhaften fünften Ausführungsvariante eines erfindungsgemäßen Stromabnehmers in geschnittener Darstellung gezeigt.

Der Stromabnehmer gemäß Fig. 5 entspricht jener beispielhaften ersten Ausführungsvariante eines erfindungsgemäßen Stromabnehmers, welche in Fig. 1 dargestellt ist.

Der Stromabnehmer weist eine Auslenkungsbegrenzungsvorrichtung auf, welche ein Schwenkelement 4 umfasst. Das Schwenkelement 4 ist über einen Träger 7 und mittels eines Drehgelenks 8 um eine in Fig. 5 projizierend erscheinende Drehachse 23 des Schwenkelements 4 drehbar mit einer Lagervorrichtung 2 des Stromabnehmers verbunden. Die Drehachse 23 ist eine erste Parallele zu einer beispielhaft in Fig. 1 gezeigten Längsachse 3 der Lagervorrichtung 2.

Der Träger 7 ist mit der Lagervorrichtung 2 verschraubt und weist an einer Oberseite einen Vorsprung mit einer in Fig. 5 nicht sichtbaren ersten Drehhemmungsgewindebohrung und einer in Fig. 5 ebenfalls nicht sichtbaren zweiten

Drehhemmungsgewindebohrung auf. In der ersten Drehhemmungsgewindebohrung ist ein vertikal ausgerichteter erster Drehhemmungsgewindestift 24 ein- und ausschraubbar geführt, in der zweiten Drehhemmungsgewindebohrung ist ein vertikal ausgerichteter zweiter Drehhemmungsgewindestift 25 ein- und ausschraubbar geführt.

Die Drehachse 23 des Schwenkelements 4 und das Drehgelenk 8 sind näher an der Lagervorrichtung 2 angeordnet als ein freies Ende der Lagervorrichtung 2. Der erste Drehhemmungsgewindestift 24 ist näher an der Lagervorrichtung 2 angeordnet als der zweite Drehhemmungsgewindestift 25. Die Drehachse 23 des Schwenkelements 4 ist zwischen einer in Fig. 5 nicht dargestellten ersten Gewindestiftlängsachse des ersten Drehhemmungsgewindestifts 24 und einer in Fig. 5 ebenfalls nicht dargestellten zweiten Gewindestiftlängsachse des zweiten Drehhemmungsgewindestifts 25 angeordnet.

Je weiter der erste Drehhemmungsgewindestift 24 nach unten aus der ersten Drehhemmungsgewindebohrung ausgeschraubt ist, umso stärker sind Drehbewegungen des Schwenkelements 4 nach unten durch den ersten Drehhemmungsgewindestift 24 begrenzt. Eine erste Endlage einer Drehbewegung des Schwenkelements 4 nach unten ist dann erreicht, wenn das Schwenkelement 4 den ersten Drehhemmungsgewindestift 24 kontaktiert.

Je weiter der zweite Drehhemmungsgewindestift 25 nach unten aus der zweiten Drehhemmungsgewindebohrung ausgeschraubt ist, umso stärker sind Drehbewegungen des Schwenkelements 4 nach oben durch den zweiten Drehhemmungsgewindestift 25 begrenzt. Eine zweite Endlage einer Drehbewegung des Schwenkelements 4 nach oben ist dann erreicht, wenn das Schwenkelement 4 den zweiten Drehhemmungsgewindestift 25 kontaktiert.

Mittels des ersten Drehhemmungsgewindestifts 24 und des zweiten Drehhemmungsgewindestifts 25 sind also Drehbewegungen des Schwenkelements 4 begrenzbar und Endlagen dieser Drehbewegungen einstellbar.

Fig. 6 zeigt einen Seitenriss eines Ausschnitts aus einer beispielhaften sechsten Ausführungsvariante eines erfindungsgemäßen Stromabnehmers in geschnittener Darstellung.

Diese beispielhafte sechste Ausführungsvariante eines erfindungsgemäßen Stromabnehmers entspricht jener beispielhaften ersten Ausführungsvariante eines erfindungsgemäßen Stromabnehmers, welche in Fig. 1 offenbart ist.

Der Stromabnehmer weist eine Auslenkungsbegrenzungsvorrichtung auf, welche ein Schwenkelement 4 umfasst. Das Schwenkelement 4 ist über einen Träger 7 und mittels eines Drehgelenks 8 um eine in Fig. 6 projizierend erscheinende Drehachse 23 des Schwenkelements 4 drehbar mit einer Lagervorrichtung 2 des Stromabnehmers verbunden. Die Drehachse 23 ist eine erste Parallele zu einer beispielhaft in Fig. 1 gezeigten Längsachse 3 der Lagervorrichtung 2.

Der Träger 7 ist mit der Lagervorrichtung 2 verschraubt.

Die Auslenkungsbegrenzungsvorrichtung umfasst einen pneumatischen Aktuator 6, mittels welchem das Schwenkelement 4 betätigbar ist. Der Aktuator 6 weist als fluidischer Aktuator 6 einen Zylinder 26 und einen Kolben 27 auf, wobei der Zylinder 26 gelenkig mit dem Schwenkelement 4 und der Kolben 27 über eine Kolbenstange 28 gelenkig mit dem Träger 7 verbunden ist. Die Kolbenstange 28 ist über ein Gabelgelenk 29 mit dem Träger 7 gekoppelt. Das Gabelgelenk 29 weist einen mit der Kolbenstange 28 verbundenen Gelenkkopf 30 sowie einen mit dem Träger 7 verschraubten Bolzen 31 auf. Der Gelenkkopf 30 ummantelt den Bolzen 31 und ist um den Bolzen 31 drehbar.

Fig. 6 zeigt einen deaktivierten Zustand der Auslenkungsbegrenzungsvorrichtung. Der Aktuator 6 ist hierbei schräg nach links oben von dem Träger 7 abstehend ausgerichtet. Der Zylinder 26 ist über eine rechte Unterkante drehgelenkig mit einer Oberseite des Schwenkelements 4 gekoppelt. Das Schwenkelement 4 ist in dem deaktivierten Zustand schräg nach links unten von dem Träger 7 abstehend ausgerichtet.

Der Zylinder 26 ist über in Fig. 6 nicht dargestellte Druckluftleitungen mit einem Druckregler und einer Druckluftversorgungseinrichtung, welche in Fig. 6 ebenfalls nicht gezeigt sind, verbunden. Über den Druckregler werden Drücke in dem Zylinder 26 geregelt.

Wird, ausgehend von dem deaktivierten Zustand der Auslenkungsbegrenzungsvorrichtung, Druckluft von oben in den Zylinder 26 eingeleitet und wird dadurch der Kolben 27 von oben mit Druck beaufschlagt, so wird der Zylinder 26 angehoben und, dadurch, dass der Zylinder 26 drehgelenkig mit dem Schwenkelement 4 verbunden ist, das Schwenkelement 4 im Uhrzeigersinn nach oben ausgelenkt. Dadurch wird die Auslenkungsbegrenzungsvorrichtung in einen aktivierten Zustand übergeführt, in welchem das Schwenkelement 4 rechtwinklig von dem Träger 7 und der Lagervorrichtung 2 abstehend ausgerichtet ist. In dem aktivierten Zustand bleibt der Kolben 27 von oben mit Druck beaufschlagt, wodurch die Auslenkungsbegrenzungsvorrichtung in dem aktivierten Zustand gehalten wird.

Die Auslenkungsbegrenzungsvorrichtung weist eine im Zusammenhang mit Fig. 7 näher beschriebene Rückstellfeder 16 auf, welche mit dem Schwenkelement 4 einerseits und mit dem Träger 7 andererseits verbunden ist.

Erfindungsgemäß ist es auch vorstellbar, dass die Auslenkungsbegrenzungsvorrichtung statt der Rückstellfeder 16 eine Aktuatorrückstellfeder aufweist, die beispielsweise an einer Unterseite des Kolbens 27 mit dem Kolben 27 sowie an einer unteren Innenwand des Zylinders 26 mit dem Zylinder 26 verbunden ist. Die Aktuatorrückstellfeder ist beispielsweise in dem aktivierten Zustand der Auslenkungsbegrenzungsvorrichtung komprimiert und wird entspannt, sobald der Kolben 27 nicht mehr von oben mit Druck beaufschlagt ist, wodurch der Zylinder 26 und das Schwenkelement 4 nach unten zurückgeführt werden und die Auslenkungsbegrenzungsvorrichtung einen deaktivierten Zustand erreicht.

Gemäß Fig. 6 ist der Aktuator 6 als pneumatischer Aktuator 6 ausgebildet. Erfindungsgemäß ist es jedoch auch denkbar, dass der Aktuator der Auslenkungsbegrenzungsvorrichtung als hydraulischer Aktuator oder als elektrischer Aktuator etc. ausgeführt ist. Ferner ist es denkbar, als Aktuator der Auslenkungsbegrenzungsvorrichtung beispielsweise einen Schwenkantrieb einzusetzen.

Fig. 7 offenbart einen Seitenriss eines Ausschnitts aus einer beispielhaften siebenten Ausführungsvariante eines erfindungsgemäßen Stromabnehmers in geschnittener Darstellung.

Der Stromabnehmer nach Fig. 7 entspricht jener beispielhaften ersten Ausführungsvariante eines erfindungsgemäßen Stromabnehmers, welche in Fig. 1 offenbart ist.

Der Stromabnehmer weist eine Auslenkungsbegrenzungsvorrichtung auf, welche ein Schwenkelement 4 umfasst. Das Schwenkelement 4 ist über einen Träger 7 der Auslenkungsbegrenzungsvorrichtung um eine erste Parallele zu einer beispielhaft in Fig. 1 gezeigten Längsachse 3 einer Lagervorrichtung 2 des Stromabnehmers drehbar mit der Lagervorrichtung 2 verbunden.

Der Träger 7 ist mit der Lagervorrichtung 2 verschraubt.

Ein pneumatischer Aktuator 6 der Auslenkungsbegrenzungsvorrichtung, wie er beispielhaft auch im Zusammenhang mit Fig. 6 beschrieben ist, ist gelenkig mit dem Schwenkelement 4 und gelenkig mit dem Träger 7 verbunden. Mittels des Aktuators 6 wird das Schwenkelement 4 betätigt.

Die Auslenkungsbegrenzungsvorrichtung umfasst weiterhin eine Rückstellfeder 16, welche einerseits gelenkig mit dem Schwenkelement 4 und andererseits gelenkig mit dem Träger 7 verbunden ist.

Fig. 7 zeigt einen aktivierten Zustand der Auslenkungsbegrenzungsvorrichtung, in welchem das Schwenkelement 4 rechtwinklig von dem Träger 7 abstehend ausgerichtet und die Rückstellfeder 16 gespannt ist. In diesem aktivierten Zustand der Auslenkungsbegrenzungsvorrichtung ist das Schwenkelement 4 in einer Lage, in welcher das Schwenkelement 4, wie beispielhaft in Fig. 2 gezeigt, einen Anschlag für ein Kontaktelement 5 der Auslenkungsbegrenzungsvorrichtung bildet.

Wird eine Betätigungskraft des Aktuators 6, welche gegen eine Rückstellkraft der Rückstellfeder 16 wirkt, ausgeschaltet, so wird die Rückstellfeder 16 entspannt und das Schwenkelement 4 wird aufgrund der Rückstellkraft nach unten geschwenkt, wodurch die Auslenkungsbegrenzungsvorrichtung in einen deaktivierten Zustand zurückgeführt wird.

Fig. 8 zeigt einen Schrägriss eines Ausschnitts aus einer beispielhaften achten Ausführungsvariante eines erfindungsgemäßen Stromabnehmers in geschnittener Darstellung.

Diese beispielhafte achte Ausführungsvariante eines erfindungsgemäßen Stromabnehmers ähnelt jener beispielhaften ersten Ausführungsvariante eines erfindungsgemäßen Stromabnehmers, welche in Fig. 1 dargestellt ist.

Im Unterschied zu jenem Stromabnehmer gemäß Fig. 1, welcher eine Auslenkungsbegrenzungsvorrichtung mit einem um eine erste Parallele zu einer Längsachse 3 einer Lagervorrichtung 2 des Stromabnehmers drehbaren Schwenkelement 4 umfasst, weist der Stromabnehmer nach Fig. 8 eine Auslenkungsbegrenzungsvorrichtung mit einem Schwenkelement 4 auf, welches um eine zweite Parallele zu einer Hochachse 32 einer Lagervorrichtung 2 des Stromabnehmers drehbar ist. Das Schwenkelement 4 ist über ein vertikal ausgerichtetes Drehgelenk 8 mit der Lagervorrichtung 2 verbunden.

Der Stromabnehmer weist weiterhin ein Stromabnehmergestänge mit einem Unterarm 1 auf, welcher um eine in Fig. 8 nicht gezeigte Unterarm-Drehachse, welche als Querachse horizontal, rechtwinklig zu der Hochachse 32 und rechtwinklig zu einer Längsachse 3 der Lagervorrichtung 2 ausgerichtet ist, drehbar mit der Lagervorrichtung 2 verbunden ist.

Mit dem Unterarm 1 ist ein Kontaktelement 5 der Auslenkungsbegrenzungsvorrichtung verschweißt, welches bei Drehbewegungen des Unterarms 1 mitbewegt wird. Das Kontaktelement 5 ist wie im Zusammenhang mit Fig. 1 beschrieben ausgeführt und angeordnet.

Fig. 8 zeigt einen deaktivierten Zustand der Auslenkungsbegrenzungsvorrichtung, in welchem das Schwenkelement 4 keinen Anschlag für das mit dem Unterarm 1 mitbewegbare Kontaktelement 5 bildet.

Ein als Zylinder-Kolben-Aktuator ausgeführter pneumatischer Aktuator 6 ist, von dem Drehgelenk 8 horizontal versetzt, an einer Unterseite des Schwenkelements 4 gelenkig mit dem Schwenkelement 4 verbunden und gelenkig mit einem Träger 7 der Auslenkungsbegrenzungsvorrichtung gekoppelt. Der Aktuator 6 entspricht im Hinblick auf funktionale Prinzipien jenem beispielhaft im Zusammenhang mit Fig. 6 beschriebenen Aktuator 6.

Das Schwenkelement 4 ist über das Drehgelenk 8 und den Träger 7 mit der Lagervorrichtung 2 verbunden. Zwischen dem Schwenkelement 4 und dem Drehgelenk 8 ist eine als Drehfeder ausgebildete Rückstellfeder angeordnet, welche in Fig. 8 nicht sichtbar ist.

Erfindungsgemäß ist es auch vorstellbar, dass, wie beispielhaft im Zusammenhang mit Fig. 6 beschrieben, der Aktuator 6 eine Aktuatorrückstellfeder aufweist.

Das Schwenkelement 4, das Drehgelenk 8, der Aktuator 6 und die Rückstellfeder sind mit dem Träger 7 verbunden, welcher, wie auch im Zusammenhang mit Fig. 4 beschrieben, in Richtung der Längsachse 3 beweglich und arretierbar angeordnet ist. Zusätzlich ist das Schwenkelement 4 über eine mit dem Schwenkelement 4 verbundene Kugeldruckschraube 14 verlängerbar ausgebildet. Erfindungsgemäß ist es allerdings auch denkbar, statt der Kugeldruckschraube 14 z.B. einen Gummipuffer etc. mit dem Schwenkelement 4 zu verbinden.

Wie erwähnt zeigt Fig. 8 einen deaktivierten Zustand der Auslenkungsbegrenzungsvorrichtung. Um die Auslenkungsbegrenzungsvorrichtung in einen aktivierten Zustand, wie er beispielhaft in Fig. 9 gezeigt ist, überzuführen, muss der Aktuator 6 einen Hub nach rechts vollziehen, wodurch das Schwenkelement 4 gegen den Uhrzeigersinn verdreht wird. Drehbewegungen des Unterarms 1 sind in diesem aktivierten Zustand begrenzt, da bei einer definierten Winkellage des Unterarms 1 das Kontaktelement 5 das Schwenkelement 4 kontaktiert. Das Schwenkelement 4 bildet also in dem aktivierten Zustand einen Anschlag für das Kontaktelement 5. Das Kontaktelement 5 kann aufgrund der Verdrehung des Schwenkelements 4 das Schwenkelement 4 nicht passieren. Die Rückstellfeder ist in dem aktivierten Zustand der Auslenkungsbegrenzungsvorrichtung gespannt. Um die Auslenkungsbegrenzungsvorrichtung aus dem aktivierten Zustand in den deaktivierten Zustand zurückzuführen, wird eine Betätigungskraft des Aktuators 6 ausgeschaltet, wodurch die Rückstellfeder entspannt und das Schwenkelement 4 in jene in Fig. 8 gezeigte Lage zurückgedreht wird.

Drehbewegungen des Schwenkelements 4 sind mittels eines in Fig. 8 nicht dargestellten, mit dem Träger 7 verbundenen Endanschlags begrenzbar, wobei Endlagen der Drehbewegungen einstellbar sind, da der Endanschlag über ein in Fig. 8 nicht gezeigtes Endanschlaggewinde in dem Träger 7 längenverstellbar ist.

Das Schwenkelement 4 weist annähernd eine plattenförmig-prismatische Form mit dreieckiger Grundfläche auf.

In Fig. 9 ist ein Schrägriss eines Ausschnitts aus einer beispielhaften neunten Ausführungsvariante eines erfindungsgemäßen Stromabnehmers in geschnittener Darstellung offenbart.

Der Stromabnehmer gemäß Fig. 9 entspricht jener beispielhaften achten Ausführungsvariante eines erfindungsgemäßen Stromabnehmers, welche in Fig. 8 gezeigt ist. Es werden daher in Fig. 9 die gleichen Bezugszeichen wie in Fig. 8 verwendet.

Im Unterschied zu Fig. 8 zeigt Fig. 9 eine aktuatorbetätigte Auslenkungsbegrenzungsvorrichtung in einem aktivierten Zustand. In diesem aktivierten Zustand bildet ein Schwenkelement 4 der Auslenkungsbegrenzungsvorrichtung einen Anschlag für ein mit einem Unterarm 1 des Stromabnehmers fest verbundenes Kontaktelement 5 der Auslenkungsbegrenzungsvorrichtung. Fig. 9 zeigt eine maximal zulässige Auslenkung des Unterarms 1, bei welcher das Kontaktelement 5 das Schwenkelement 4 kontaktiert. Eine Drehbewegung des Unterarms 1 gegen den Uhrzeigersinn ist dadurch blockiert.

Eine nicht erfindungsgemäße Ausführungsvariante einer Auslenkungsbegrenzungsvorrichtung eines Stromabnehmers kann beispielsweise eine bezüglich einer Stromabnehmer-Querachse gelenkig mit einer Lagervorrichtung des Stromabnehmers verbundene Führungsschiene mit einer Ausnehmung, in welche ein fest mit einem Unterarm des Stromabnehmers verbundenes Kontaktelement der Auslenkungsbegrenzungsvorrichtung eingeklinkt ist, umfassen, wobei Auslenkungen des Kontaktelements durch Enden der Ausnehmung begrenzt sind.

Eine weitere, nicht erfindungsgemäße Ausführungsvariante einer Auslenkungsbegrenzungsvorrichtung eines Stromabnehmers kann beispielsweise einen bezüglich einer Stromabnehmer-Querachse gelenkig mit einer Lagervorrichtung des Stromabnehmers verbundenen, ein- und ausschwenkbaren Fanghebel umfassen, wobei Auslenkungen eines mit einem Unterarm des Stromabnehmers fest verbundenen Kontaktelements der Auslenkungsbegrenzungsvorrichtung durch Ausschwenken des Fanghebels und einen Druckkontakt des Kontaktelements mit einer Front des Fanghebels begrenzt werden können.

### Liste der Bezeichnungen

- 1: Unterarm
- 2: Lagervorrichtung
- 3: Längsachse
- 4: Schwenkelement
- 5: Kontaktelement
- 6: Aktuator
- 7: Träger
- 8: Drehgelenk
- 9: Erste Ausnehmung
- 10: Zweite Ausnehmung
- 11: Erster Stützisolator
- 12: Zweiter Stützisolator
- 13: Dach
- 14: Kugeldruckschraube
- 15: Kugeldruckschraubengewindebohrung
- 16: Rückstellfeder
- 17: Erstes Langloch
- 18: Zweites Langloch
- 19: Erste Schraube
- 20: Zweite Schraube
- 21: Längsbegrenzungsgewindestift
- 22: Führungsleiste
- 23: Drehachse
- 24: Erster Drehhemmungsgewindestift
- 25: Zweiter Drehhemmungsgewindestift
- 26: Zylinder
- 27: Kolben
- 28: Kolbenstange
- 29: Gabelgelenk
- 30: Gelenkkopf
- 31: Bolzen
- 32: Hochachse

## Patentansprüche

1. Stromabnehmer für ein Schienenfahrzeug mit einem Stromabnehmergestänge und einer Lagervorrichtung (2), mit welcher das Stromabnehmergestänge gekoppelt ist und über welche das Stromabnehmergestänge mit einem Schienenfahrzeug, insbesondere mit einem Schienenfahrzeugdach, verbindbar ist, sowie mit einer Auslenkungsbegrenzungsvorrichtung, wobei das Stromabnehmergestänge einen auslenkbaren Unterarm (1) aufweist, welcher drehbar mit der Lagervorrichtung (2) verbunden ist, **dadurch gekennzeichnet, dass** die Auslenkungsbegrenzungsvorrichtung ein Schwenkelement (4) und ein Kontaktelement (5) umfasst, wobei das Schwenkelement (4) zumindest um eine erste Parallele zu einer Längsachse (3) der Lagervorrichtung (2) oder zumindest um eine zweite Parallele zu einer Hochachse (32) der Lagervorrichtung (2) drehbar mit der Lagervorrichtung (2) verbunden ist, wobei das Kontaktelement (5) fest mit dem Unterarm (1) verbunden ist, und wobei das Schwenkelement (4) in eine Lage drehbar ist, in welcher das Schwenkelement (4) einen Anschlag für das zusammen mit dem Unterarm (1) auslenkbare Kontaktelement (5) bildet.

2. Stromabnehmer nach Anspruch 1, **dadurch gekennzeichnet, dass** die Auslenkungsbegrenzungsvorrichtung zumindest einen Aktuator (6) aufweist, mittels welchem das Schwenkelement (4) betätigbar ist.

3. Stromabnehmer nach Anspruch 2, **dadurch gekennzeichnet, dass** der zumindest eine Aktuator (6) gelenkig mit dem Schwenkelement (4) und gelenkig mit der Lagervorrichtung (2) verbunden ist.

4. Stromabnehmer nach Anspruch 3, **dadurch gekennzeichnet, dass** der zumindest eine Aktuator (6) über ein Gabelgelenk (29) mit der Lagervorrichtung (2) verbunden ist.

5. Stromabnehmer nach einem der Ansprüche 2 bis 4, **dadurch gekennzeichnet, dass** der zumindest eine Aktuator (6) als fluidischer Aktuator (6) ausgebildet ist und einen Zylinder (26) sowie einen Kolben (27) aufweist.

6. Stromabnehmer nach Anspruch 5, **dadurch gekennzeichnet, dass** der Zylinder (26) gelenkig mit dem Schwenkelement (4) verbunden ist und der Kolben (27) gelenkig mit der Lagervorrichtung (2) verbunden ist.

7. Stromabnehmer nach einem der Ansprüche 1 bis 6, **dadurch gekennzeichnet, dass** das Kontaktelement (5) oder/und das Schwenkelement (4) zumindest in Richtung der Längsachse (3) der Lagervorrichtung (2) verlängerbar ausgebildet ist/sind.

8. Stromabnehmer nach einem der Ansprüche 1 bis 7, **dadurch gekennzeichnet, dass** zumindest das Schwenkelement (4) zumindest in Richtung der Längsachse (3) der Lagervorrichtung (2) beweglich und arretierbar angeordnet ist.

9. Stromabnehmer nach einem der Ansprüche 1 bis 8, **dadurch gekennzeichnet, dass** Drehbewegungen des Schwenkelements (4) begrenzbar sind, wobei Endlagen der Drehbewegungen einstellbar sind.

10. Stromabnehmer nach einem der Ansprüche 1 bis 9, **dadurch gekennzeichnet, dass** die Auslenkungsbegrenzungsvorrichtung zumindest eine Rückstellfeder (16) aufweist, welche mit dem Schwenkelement (4) einerseits und mit der Lagervorrichtung (2) andererseits verbunden ist.

11. Stromabnehmer nach Anspruch 10, **dadurch gekennzeichnet, dass** die zumindest eine Rückstellfeder (16) in jener Lage, in welcher das Schwenkelement (4) einen Anschlag für das Kontaktelement (5) bildet, gespannt ist.

12. Stromabnehmer nach Anspruch 5 oder 6, **dadurch gekennzeichnet, dass** die Auslenkungsbegrenzungsvorrichtung zumindest eine Aktuatorrückstellfeder aufweist, welche mit dem Zylinder (26) einerseits und mit dem Kolben (27) andererseits verbunden ist.

13. Stromabnehmer nach einem der Ansprüche 1 bis 12, **dadurch gekennzeichnet, dass** das Schwenkelement (4) zumindest annähernd eine plattenförmig-prismatische Form mit dreieckiger Grundfläche aufweist.

14. Stromabnehmer nach einem der Ansprüche 1 bis 13, **dadurch gekennzeichnet, dass** das Kontaktelement (5) zumindest annähernd eine plattenförmig-prismatische Form mit dreieckiger Grundfläche aufweist.

15. Schienenfahrzeug mit zumindest einem Stromabnehmer nach einem der Ansprüche 1 bis 14.
